# EUROPÄISCHE PATENTSCHRIFT

(11) **EP 2 597 277 B1**
(45) Veröffentlichungstag und Bekanntmachung des Hinweises auf die Patenterteilung: **28.06.2017**
(21) Anmeldenummer: 12193309.7
(22) Anmeldetag: 20.11.2012
(51) Int. Cl.: F01M 13/04, B01D 45/06, B01D 45/08, F16K 15/02, F16K 15/14

(54) **Ölabscheider**
Oilseparator
Déshuileur

(30) Priorität: 25.11.2011 DE 102011087146
(43) Veröffentlichungstag der Anmeldung: 29.05.2013
(73) Patentinhaber: MAHLE International GmbH, 70376 Stuttgart (DE)
(72) Erfinder: Goerlich, Leszek, 71229 Leonberg (DE); Ruppel, Stefan, 69126 Heidelberg-Emmertsgrund (DE)
(74) Vertreter: BRP Renaud & Partner mbB Rechtsanwälte Patentanwälte Steuerberater

(56) Entgegenhaltungen:
- WO-A1-2007/028351
- WO-A1-2011/089006
- DE-A1-102008 044 857
- DE-A1-102009 019 643
- US-A1- 2009 193 770

## Beschreibung

Die vorliegende Erfindung betrifft einen Ölabscheider für eine Kurbelgehäuseentlüftung einer Brennkraftmaschine, insbesondere eines Kraftfahrzeugs.

Während des Betriebs einer Brennkraftmaschine, die als Kolbenmotor ausgestaltet ist, entstehen Blow-by-Gase, die von den einzelnen Zylindern an den zugehörigen Kolben vorbei in das Kurbelgehäuse eintreten. Um einen unerwünschten Überdruck im Kurbelgehäuse zu vermeiden, kommt eine Kurbelgehäuseentlüftung zum Einsatz, die das Blow-by-Gas vom Kurbelgehäuse abführt und zweckmäßig einem Frischlufttrakt der Brennkraftmaschine zuführt, so dass die Blow-by-Gase zusammen mit Frischluft wieder den Brennräumen der Zylinder zugeführt werden können. Da während des Betriebs der Brennkraftmaschine im Kurbelgehäuse ein Ölnebel entsteht, können die über die Kurbelgehäuseentlüftung abgeführten Blow-by-Gase Öl bzw. Ölnebel enthalten. Zur Reduzierung des Ölverbrauchs der Brennkraftmaschine kommen Ölnebel- bzw. Ölabscheider der eingangs genannten Art zum Einsatz. Sie reduzieren den Ölgehalt des abgeführten Blow-by-Gases vor dessen Einleitung in den Frischluftrakt. Das abgeschiedene Öl wird zweckmäßig über eine entsprechende Rücklaufleitung wieder dem Kurbelgehäuse bzw. einer das Kurbelgehäuse von unten begrenzenden Ölwanne zugeführt.

Zum Steuern einer das Blow-by-Gas vom Kurbelgehäuse abführenden Blow-by-Gasleitung, zum Steuern einer das abgeschiedene Öl zum Kurbelgehäuse zurückführenden Rücklaufleitung sowie zum Steuern einer den jeweiligen Ölabscheider innerhalb der Kurbelgehäuseentlüftung umgehenden Bypassleitung können Ventilanordnungen zum Einsatz kommen, die ab einem bestimmten Differenzdruck öffnen oder schließen, je nach Einbauort und gewünschter Funktionalität.

Aus der DE 20 2004 009 673 U1 ist eine Ventilanordnung für eine Kurbelgehäuseentlüftung bekannt, die eine Flachfeder oder Blattfeder aufweist. Die Blattfeder ist dabei im Wesentlichen dreieckförmig gestaltet und weist in den drei Eckbereichen jeweils eine Durchgangsöffnung auf, durch die jeweils ein Dorn eines Ventilgehäuses hindurchführbar ist, um die Blattfeder im Bereich eines Ventilsitzes zu positionieren, der ebenfalls am Gehäuse ausgebildet ist. Die Durchgangsöffnungen können dabei zumindest teilweise von radial nach innen vorstehenden Zungen eingefasst sein, die sich beim Aufstecken des Ventilglieds auf die Dorne mit den Dornen verkrallen. In einem zentralen Bereich weist die Blattfeder ein Ventilglied auf, das im Wesentlichen durch eine kreisförmige Platte gebildet ist und von einem dreischenkeligen Rahmen eingefasst ist, in dessen Eckbereichen die zuvor genannten Durchgangsöffnungen angeordnet sind. Das Ventilglied ist nun über drei, in Umfangsrichtung versetzt angeordnete spiralförmige Federabschnitte mit dem Rahmen verbunden, so dass das Ventilglied senkrecht zur Ebene der Blattfeder gegen Federkraft relativ zum Ventilsitz hubverstellbar ist.

Aus der DE 33 29 652 A1 ist ein Rückschlagsperrventil bekannt, bei dem zum Antreiben eines Ventilglieds in eine Schließstellung eine Rückstellfeder vorgesehen ist. Dabei ist diese Rückstellfeder als Blattfeder konzipiert, die einen zentralen, kreisförmigen Haltebereich zum Festlegen des Ventilglieds aufweist. Ferner weist die Rückstellfeder einen kreisförmigen Einspannbereich auf, der den zentralen Haltebereich koaxial umschließt und der in einem Ventilgehäuse axial zwischen zwei Gehäuseteilen eingespannt werden kann. Der Haltebereich ist nun über drei in Umfangsrichtung verteilt angeordnete, spiralförmige Federarme mit dem Einspannbereich verbunden. Somit kann sich der Haltebereich relativ zum Einspannbereich in der Axialrichtung federelastisch verstellen, wodurch das Ventilglied relativ zu einem am Gehäuse ausgebildeten Ventilsitz hubverstellbar ist. Aus der WO 2007/028351 A1 ist ein Ölabscheider bekannt. Die vorliegende Erfindung beschäftigt sich mit dem Problem, für einen Ölabscheider oder Ölnebenabscheider der eingangs genannten Art eine verbesserte Ausführungsform anzugeben, die sich insbesondere durch eine hohe Effizienz und eine preiswerte Realisierbarkeit auszeichnet. Außerdem ist eine kompakte Bauform angestrebt.

Bei der vorliegenden Erfindung wird dieses Problem insbesondere durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Ölabscheider mit einem Gehäuse zu versehen, das einen Strömungspfad für Blow-by-Gas aufweist, und im Strömungspfad des Gehäuses einen Impaktor auszubilden, der mit Düsen arbeitet. Hierzu kann insbesondere vorgesehen sein, dass das Gehäuse eine zylindrische Wand aufweist, wobei das Gehäuse außerdem bezüglich einer Längsmittelachse der zylindrischen Wand einen axialen Einlass für Blow-by-Gas und einen axialen Auslass für Blow-by-Gas aufweist. Hierdurch lässt sich das Gehäuse besonders einfach in einen Kanal oder in eine Öffnung einsetzen. Besonders vorteilhaft ist nun eine Ausgestaltung des Impaktors derart, dass seine zwischen Einlass und Auslass im Strömungspfad angeordneten Düsen bezüglich der Längsmittelachse der zylindrischen Wand radial orientiert und auf eine Innenseite der zylindrischen Wand ausgerichtet sind. Hierdurch wird erreicht, dass die Blow-by-Gasströmung zwischen dem Einlass und den Düsen und zwischen den Düsen und dem Auslass jeweils um 90° umgelenkt werden muss, um das Gehäuse durchströmen zu können. Zu diesem Zweck besitzt die jeweilige durchströmbare Düse eine radiale Austrittsöffnung. In den Düsen erfolgt dabei gleichzeitig eine signifikante Beschleunigung der Blow-by-Gasströmung, was die Impaktorwirkung mit der jeweiligen, senkrecht zu den Düsen verlaufenden Prallwand verbessert. Zweckmäßig sind die Düsen konvergierend ausgestaltet. Mit anderen Worten, ein durchströmbarer Querschnitt der jeweiligen Düse konvergiert bzw. verjüngt sich in der Durchströmungsrichtung der jeweiligen Düse. Zweckmäßig sind hierbei die Düsen bezüglich der Längsmittelachse der zylindrischen Wand ringförmig angeordnet. Das bedeutet, dass mehrere Düsen in der Umfangsrichtung, insbesondere gleichmäßig, verteilt angeordnet und jeweils radial ausgerichtet sind, so dass sich letztlich eine sternförmige Anordnung der Düsen entlang eines Kreises ergibt.

Entsprechend einer vorteilhaften Ausführungsform ist der Ölabscheider mit einem Ventilglied zum Steuern eines die Düsen umgehenden Bypasspfads ausgestattet. Durch die Düsen kommt es stromauf der Düsen zu einem Druckanstieg im Ölabscheider, wodurch die Beschleunigung der Blow-by-Gasströmung in den Düsen ermöglicht wird. Fällt während des Betriebs der Brennkraftmaschine, zum Beispiel bei Volllast, vergleichsweise viel Blow-by-Gas an, kann der Druck am Einlass auf unzulässig hohe Werte ansteigen. Das Ventilglied kann dann den Bypass öffnen, um eine gewünschte Druckentspannung herbeizuführen. Hierdurch kann ein übermäßiger Druckanstieg an der Einlassseite des Ölabscheiders und somit im Kurbelgehäuse vermieden werden. Zur Realisierung des Bypasses kann insbesondere vorgesehen sein, dass zumindest eine der Düsen an einer dem Auslass zugewandten Seite zwischen ihrer Austrittsöffnung und ihrer Eintrittsöffnung zumindest eine axiale Öffnung aufweist, die mit dem Ventilglied gesteuert werden kann. Hierbei kann das Ventilglied zweckmäßig mittels Federkraft in eine die jeweilige Öffnung schließende Schließstellung angetrieben sein. Mit anderen Worten, die jeweilige Düse selbst besitzt eine Bypassöffnung, die unmittelbar mit dem Ventilglied gesteuert werden kann. Die Gesamtheit aller Bypassöffnungen der Düsen bildet dann den Bypasspfad. Die vorgeschlagene Bauform lässt sich besonders kompakt und preiswert realisieren. Entsprechend der vorteilhaften Ausführungsform weist zumindest eine der Düsen eine solche radiale Austrittsöffnung und eine solche axiale Öffnung auf, was die Integration des Bypasses in die Düsenanordnung vereinfacht.

Ferner ist eine Ausführungsform von besonderem Vorteil, bei welcher der durchströmbare Querschnitt der jeweiligen Austrittsöffnung unabhängig ist von der Stellung bzw. vom Hub des Ventilglieds.

Entsprechend einer vorteilhaften Weiterbildung kann das Ventilglied durch einen außenliegenden Ringbereich einer Blattfeder gebildet sein, die einen zentralen Befestigungsbereich zum Fixieren der Blattfeder am Gehäuse und einen den Befestigungsbereich mit dem Ringbereich verbindenden axial federnden Federbereich aufweist. Derartige Blattfedern lassen sich besonders preiswert herstellen. Das ringförmige Ventilglied kann gleichzeitig mit den Bypassöffnungen mehrerer oder aller Düsen zusammenwirken, die hierzu ringförmig angeordnet sind. Bemerkenswert ist dabei, dass der zentral zum Ventilglied angeordnete Befestigungsbereich keinen oder nur einen geringen Einfluss auf die Blow-by-Gasströmung besitzt, so dass diesbezüglich nachteilige Wechselwirkungen vermieden werden können.

Das Ventilglied ist am Gehäuse axial, also parallel zur Längsmittelachse der zylindrischen Wand hubverstellbar angeordnet und liegt dabei in einer Ebene, die sich senkrecht zur Längsmittelachse der zylindrischen Wand erstreckt. Hierdurch ermöglicht das Ventilglied auch bei geöffnetem Bypasspfad eine Ablenkung der Bypassströmung, zumindest eines Teils der Bypassströmung, gegen die Wand, so dass auch bei geöffnetem Bypasspfad über die gewählte Positionierung des Ventilglieds die Impaktorwirkung vorhanden ist.

Besonders zweckmäßig ist eine Weiterbildung, bei welcher der Federbereich spiralförmig ausgestaltet ist. Ein derartiger spiralförmiger Federbereich lässt sich innerhalb der Blattfeder besonders einfach realisieren, derart, dass die Blattfeder mit dem außenliegenden Ringbereich, dem zentralen Befestigungsbereich und dem Federbereich integral aus einem Stück hergestellt werden kann. Zweckmäßig ist dabei eine Ausführungsform, bei welcher der Federbereich als Einfachspirale konzipiert ist, also nur einen einzigen spiralförmigen Federarm aufweist. Der spiralförmige Federarm kann beispielsweise eine Windung von etwa 360° realisieren.

Bei einer anderen vorteilhaften Ausführungsform kann der Befestigungsbereich eine zentrale Durchgangsöffnung aufweisen, mit der die Blattfeder auf einen axialen Dorn des Gehäuses aufgesteckt werden kann. Über die Durchgangsöffnung und den Dorn lässt sich eine Zentrierung der Blattfeder bezüglich der Düsen realisieren.

Zweckmäßig kann der Befestigungsbereich an einem Rand der Durchgangsöffnung mehrere Krallen aufweisen, die sich beim Aufstecken der Blattfeder auf den Dorn mit dem Dorn verkrallen, sobald dieser die Durchgangsöffnung durchdringt. Hierdurch kann die Blattfeder besonders einfach ohne zusätzliche Befestigungsmittel verliersicher am Gehäuse festgelegt werden. Die Krallen können sich dabei radial nach innen erstrecken. Insbesondere können sie auch aus der Ebene des Befestigungsbereichs ausgestellt sein.

Gemäß einer anderen vorteilhaften Ausführungsform kann die jeweilige Bypassöffnung der jeweiligen Düse durch eine dem Auslass zugewandte axial offene Seite der jeweiligen Düse gebildet sein. In diesem Fall erstreckt sich die Bypassöffnung der jeweiligen Düse über die gesamte radiale Länge dieser Düse. Mit anderen Worten, die jeweilige axiale Öffnung erstreckt sich von einer Eintrittsöffnung der jeweiligen Düse bis zur radialen Austrittsöffnung oder bis zu einem radialen Verschluss der jeweiligen Düse, der anstelle einer radialen Austrittsöffnung zumindest bei einer Düse optional vorgesehen sein kann. Durch Abheben des Ventilglieds von der jeweiligen Düse wird besagte Bypassöffnung freigegeben, die im Vergleich zum radial durchströmbaren Querschnitt der Düse einen deutlich vergrößerten Querschnitt besitzt und somit zur gewünschten Entspannung auf der Einlassseite führt.

Bei einer anderen Ausführungsform kann das Gehäuse einen Ringkragen aufweisen, der an einer dem Auslass zugewandten axialen Stirnseite eine Auflage für den Ringbereich der Blattfeder bildet und einen stromauf der Düsen liegenden Zuströmraum von einem stromab der Düsen liegenden Abströmraum trennt. Der Ringkragen umschließt somit bei daran anliegendem Ringbereich der Blattfeder die Federelemente und den Befestigungsbereich und führt somit in der Schließstellung des Ventilglieds zu einer quasi vollständigen Entkopplung des Federbereichs und des Befestigungsbereichs sowie des gehäuseseitigen Dorns von der Zuströmung des Blow-by-Gases. Hierdurch kann der Strömungswiderstand des Ölabscheiders reduziert werden, so dass mehr Druckdifferenz zum Beschleunigen der Blow-by-Gasströmung zur Verfügung steht, was die Effizienz des Impaktors erhöht.

Das Gehäuse kann optional einen Umlenkbereich aufweisen, der im Zuströmbereich zentral angeordnet ist und der die axiale Einlassströmung zu den radialen Düsen umlenkt. An diesem Umlenkbereich kann der zuvor genannte Ringkragen ausgebildet sein. Der Umlenkbereich selbst ist in der Axialrichtung für die Gasströmung undurchlässig, wodurch die Umlenkung in die Radialrichtung bewirkt wird. Der Umlenkbereich kann auch den Dorn zum Festlegen der Blattfeder tragen. Durch den Umlenkbereich ist eine Leckage im Bereich des inneren Ventilsitzes reduziert.

Besonders vorteilhaft ist eine Weiterbildung, bei welcher der Umlenkbereich an einer dem Einlass zugewandten Seite einen Konus aufweist, der sich zum Einlass hin verjüngt. Zweckmäßig ist der Konus dabei koaxial zur Längsmittelachse der zylindrischen Wand angeordnet. Der Konus unterstützt dabei die Umlenkung der Einlassströmung zu den radialen Düsen, ohne dass dabei wesentliche Strömungsverluste auftreten.

Der Umlenkbereich kann beispielsweise mit Hilfe von sternförmig angeordneten Radialstegen am Gehäuse gehalten sein.

Gemäß einer anderen vorteilhaften Ausführungsform kann der Impaktor zumindest einen Ölaufnahmekörper aufweisen, der an der Innenseite der Wand angeordnet ist. Zweckmäßig erstreckt sich dieser Ölaufnahmekörper ringförmig geschlossen entlang der Innenseite der Wand. Der Ölaufnahmekörper bildet somit die eigentliche Prallwand, gegen die die aus den Düsen austretende Blow-by-Gasströmung anströmt, um erneut in Richtung Auslass umgelenkt zu werden. Die mitgeführten Öltröpfchen prallen dabei gegen den Ölaufnahmekörper. Der Ölaufnahmekörper ist so beschaffen, dass er die daran anprallenden Öltröpfchen absorbieren, sammeln und ableiten kann. Beispielsweise ist der Ölaufnahmekörper aus einem Vließmaterial hergestellt.

Bei einer anderen Ausführungsform kann das Gehäuse mehrere Axialstege aufweisen, die zur Innenseite der zylindrischen Wand beabstandet und in der Umfangsrichtung verteilt angeordnet sind. Das Ventilglied kann an den Axialstegen radial zentriert bzw. positioniert und/oder axial geführt sein. Hierdurch lässt sich die Funktionssicherheit des Ventilglieds verbessern. Zusätzlich oder alternativ kann vorgesehen sein, dass der Ölaufnahmekörper radial zwischen den Axialstegen und der zylindrischen Wand angeordnet ist. Hierdurch ergibt sich eine sichere radiale Fixierung des Ölaufnahmekörpers am Gehäuse.

Gemäß einer anderen vorteilhaften Ausführungsform kann das Gehäuse wenigstens einen Haltesteg aufweisen, der im Bereich des Auslasses, axial gegenüber einem im Bereich des Einlasses angeordneten Boden des Gehäuses angeordnet ist und der sich radial erstreckt, wobei der Ölaufnahmekörper axial zwischen dem Boden und dem jeweiligen Haltesteg angeordnet ist. Hierdurch kann der an der Wand positionierte Ölaufnahmekörper axial gesichert werden.

Gemäß der vorteilhaften Ausführungsform ist zumindest eine der Düsen verschlossen. Die jeweilige geschlossene Düse ist zumindest in der Radialrichtung nicht durchströmbar. Beispielsweise kann ein entsprechender Verschluss anstelle einer radialen Austrittsöffnung am radial außenliegenden Ende der Düse vorgesehen sein. Durch das Anbringen geschlossener Düsen kann die Strömungsverteilung auf die offenen Düsen moduliert werden. Dabei ist es grundsätzlich möglich, dass auch wenigstens eine der verschlossenen Düsen zumindest eine seitliche Öffnung aufweist, die mit Hilfe des Ventilglieds gesteuert werden kann. Somit ist die jeweilige Düse zwar bei geschlossenem Ventilglied in der Radialrichtung nicht durchströmbar, trägt jedoch bei geöffnetem Ventilglied zur Realisierung des Bypasspfads bei.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten Längsschnitt durch einen Ölabscheider,
- Fig. 2: eine Axialansicht einer Blattfeder,
- Fig. 3: eine Axialansicht des Ölabscheiders bei entfernter Blattfeder und fehlenden Haltestegen, entsprechend einer Blickrichtung III in Figur 1,
- Fig. 4: eine Ansicht wie in Figur 3, jedoch mit Blattfeder und mit Haltestegen.

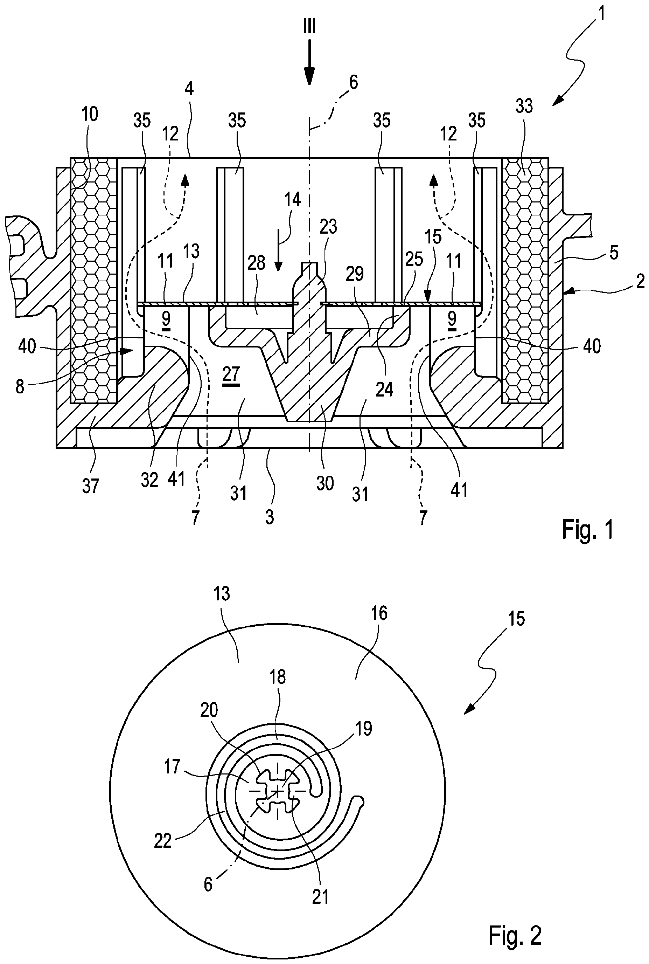

Entsprechend den Figuren 1 bis 4 umfasst ein Ölabscheider 1 ein Gehäuse 2, das einen axialen Einlass 3 für Blow-by-Gas und einen axialen Auslass 4 für Blow-by-Gas aufweist. Ferner besitzt das Gehäuse 2 eine zylindrische Wand 5, die eine Längsmittelachse 6 definiert. Im Gehäuse 2 ist ein Strömungspfad 7 ausgebildet, der durch Strömungspfeile angedeutet ist.

Der Ölabscheider 1 weist ferner einen Impaktor 8 auf, der im Strömungspfad 7 zwischen dem Einlass 3 und dem Auslass 4 angeordnet ist und der mehrere Düsen 9 aufweist. Die Düsen 9 sind dabei zwischen Einlass 3 und Auslass 4 im Strömungspfad 7 angeordnet und radial auf eine Innenseite 10 der Wand 5 ausgerichtet. Das bedeutet, dass das Blow-by-Gas, das die Düsen 9 durchströmt, radial in Richtung auf die Innenseite 10 der Wand 5 zu aus den Düsen 9 austritt.

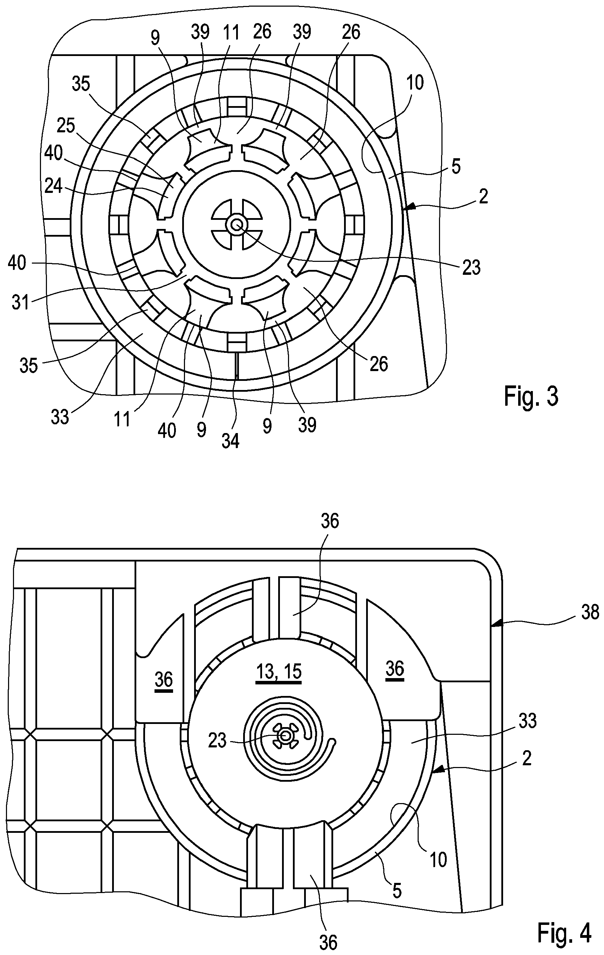

Die durchströmbaren Düsen 9 erstrecken sich dabei jeweils von einer Eintrittsöffnung 41 bis zu einer Austrittsöffnung 40. Gemäß einer weiter unten mit Bezug auf Fig. 3 näher erläutertten Ausführungsform können auch nicht durchströmbare Düsen 9 existieren, bei denen anstelle einer Austrittsöffnung 40 ein radialer Verschluss 39 vorgesehen ist, so dass eine radiale Durchströmung der jeweiligen Düse 9 nicht möglich ist. Die Düsen 9 können in der radialen Durchströmungsrichtung konvergieren, und zwar gemäß Fig. 1 bzüglich der Axialrichtung und/oder gemäß Fig. 3 bezüglich der Umfangsrichtung.

Wie sich insbesondere Figur 3 entnehmen lässt, sind die Düsen 9 ringförmig zueinander benachbart angeordnet und in der Umfangsrichtung gleichmäßig verteilt, wodurch sich eine sternförmige Anordnung der Düsen 9 bezüglich der Längsmittelachse 6 ergibt. Wie sich den Figuren 1 und 3 entnehmen lässt, ist zumindest eine der Düsen 9 an einer dem Auslass 4 zugewandten Seite axial offen, und zwar zweckmäßig über die gesamte radiale Länge der jeweiligen Düse 9. Eine entsprechende axiale Öffnung ist dabei mit 11 bezeichnet. Diese Axialöffnung 11 kann auch als Bypassöffnung 11 bezeichnet werden. Im Beispiel sind alle Düsen 9 mit einer derartigen Axial- oder Bypassöffnung 11 versehen. Die Bypassöffnungen 11 der Düsen 9 bilden zusammen einen Bypasspfad 12, der in Figur 1 durch mit unterbrochener Linie gezeichnete Pfeile angedeutet ist.

Bei den durchströmbaren Düsen 9 erstreckt sich die jeweilige Bypassöffnung 11 jeweils von der Eintrittsöffnung 41 bis zur Austrittsöffnung 40. Bei den radial nicht durchströmbaren Düsen 9 erstreckt sich die jeweilige Bypassöffnung 11 von der Eintrittsöffnung 41 bis zum Verschluss 39.

Zum Steuern des Bypasspfads 12 ist ein Ventilglied 13 vorgesehen. Dabei ist das Ventilglied 13 gleichzeitig allen Bypassöffnungen 11 der Düsen 9 zugeordnet, so dass durch das gemeinsame Ventilglied 13 sämtliche Bypassöffnungen 11 gesteuert werden können. Bemerkenswert ist dabei, dass die durchströmbaren Querschnitte der Austrittsöffnungen 40 beim Verstellen des Ventilglieds 13 konstant bleiben, so dass sie also unabhängig sind vom Hub bzw. von der axialen Stellung des Ventiglieds 13.

Das Ventilglied 13 ist dabei mittels einer durch einen Pfeil angedeuteten Federkraft 14 in eine Schließstellung angetrieben, in der das Ventilglied 13 die Bypassöffnungen 11 und somit den Bypass 12 verschließt.

Zur Realisierung des Ventilglieds 13 ist eine Blattfeder 15 vorgesehen, die gemäß Figur 2 einen außenliegenden Ringbereich 16, einen zentralen Befestigungsbereich 17 und einen Federbereich 18 umfasst. Der Ringbereich 16 bildet das Ventilglied 13 und wirkt im montierten Zustand mit den Düsen 9 bzw. mit deren Bypassöffnungen 11 zusammen. Der Befestigungsbereich 17 dient zum Fixieren der Blattfeder 15 am Gehäuse 2 und besitzt hierzu eine Durchgangsöffnung 19, die von einem Öffnungsrand 20 eingefasst ist, von dem mehrere Krallen 21 nach innen, also in Richtung Längsmittelachse 6 abstehen. Der Federbereich 18 verbindet den Ringbereich 16 axial federnd mit dem Befestigungsbereich 17. Der Federbereich 18 ist hier spiralförmig ausgestaltet, und zwar in Form einer Einfachspirale, die sich durch einen einzigen Federarm 22 auszeichnet, der sich im Beispiel mit einer Windung über etwa 360° um die Längsmittelachse 6 erstreckt.

Am Gehäuse 2 ist zur Montage der Blattfeder 15 ein koaxial zur Längsmittelachse 6 angeordneter Dorn 23 vorgesehen, der die zentrale Durchgangsöffnung 19 durchdringt und mit dem sich die Krallen 21 verkrallen.

Gemäß Figur 1 besitzt das Gehäuse 2 einen Ringkragen 24, der sich koaxial zur Längsmittelachse 6 erstreckt und der an einer dem Auslass 4 zugewandten axialen Stirnseite 25 eine Auflage für den Ringbereich 16 der Blattfeder 15 bildet. Die Blattfeder 15 liegt im Ringbereich 16 außerdem auf Sitzflächen 26 auf, die gemäß Figur 3 in der Umfangsrichtung jeweils zwischen zwei benachbarten Düsen 9 angeordnet sind. Zweckmäßig liegen die Sitzflächen 26 und die Stirnseite 25 des Ringkragens 24 in einer gemeinsamen Ebene, die sich senkrecht zur Längsmittelachse 6 erstreckt. Der Ringkragen 24 trennt gemäß Figur 1 einen stromauf der Düsen 9 liegenden Zuströmraum 27 von einem stromab der Düsen 9 liegenden Abströmraum 28. Während der Zuströmraum 27 zum Einlass 3 axial offen ist, ist der Abströmraum 28 radial vom Ringkragen 24 eingefasst und axial zum Auslass 4 hin offen. Allerdings ist bei montierter Blattfeder 15 der Abströmraum 28 axial durch den Befestigungsbereich 17 und teilweise durch den Federbereich 18 begrenzt.

Das Gehäuse 2 weist ferner einen Umlenkbereich 29 auf, der im Zuströmbereich 27 zentral angeordnet ist. Ferner bewirkt der Umlenkbereich 29 eine Umlenkung der axialen Einlassströmung zu den radialen Düsen 9. Der Umlenkbereich 29 begrenzt den Abströmraum 28 axial in Richtung des Einlasses 3. Auf der Seite des Abströmraums 28 trägt der Umlenkbereich 29 den Dorn 23. Auf der Seite des Zuströmraums 27 weist der Umlenkbereich einen Konus 30 auf, der koaxial zur Längsmittelachse 6 angeordnet ist und der sich zum Einlass 3 hin verjüngt. Der Umlenkbereich 29 ist mit Hilfe mehrerer, sternförmig angeordneter Radialstege 31 am Gehäuse 2 gehalten. Im Beispiel sind die Radialstege im Zuströmraum 27 angeordnet, so dass sie den Konus 30 mit einem Abschnitt 32 des Gehäuses 2 verbinden.

Der Impaktor 8 weist außerdem einen Ölaufnahmekörper 33 auf, der entlang der Innenseite 10 der Wand 5 angeordnet ist und dementsprechend für die aus den Düsen 9 austretend Blow-by-Gasströmung 9 als Prallwand dient. Der Ölaufnahmekörper 33 erstreckt sich entlang der Innenwand 10 ringförmig. Er kann dabei gemäß Figur 3 einen Schlitz 34 bzw. einen Stoß 34 aufweisen oder in der Umfangsrichtung geschlossen umlaufend konzipiert sein.

Gemäß den Figuren 1, 3 und 4 kann das Gehäuse 2 außerdem mehrere Axialstege 35 aufweisen, die einerseits zur Innenseite 10 der Wand 5 radial beabstandet und andererseits in der Umfangsrichtung verteilt angeordnet sind. Das Ventilglied 13 kann radial außen an diesen Axialstegen 35 radial positioniert und/oder axial geführt sein. Der zuvor genannte Ölaufnahmekörper 33 ist radial zwischen den Axialstegen 35 und der Wand 5 angeordnet, wodurch der Ölaufnahmekörper 33 radial positioniert ist.

Gemäß Figur 4 kann das Gehäuse 2 außerdem mit wenigstens einem Haltesteg 36 ausgestattet sein, der im Bereich des Auslasses 4 axial gegenüber einem in Figur 1 erkennbaren Boden 37, der sich im Bereich des Einlasses 3 befindet, angeordnet ist. Der jeweilige Haltesteg 36 erstreckt sich dabei quer zur Längsmittelachse 6, insbesondere radial, wobei er den Ölaufnahmekörper 33 radial überlappt. Dementsprechend ist der Ölaufnahmekörper 33 axial zwischen dem Boden 37 und dem jeweiligen Haltesteg 36 angeordnet. Bei der in Figur 4 gezeigten Ausführungsform ist einer der Haltestege 36, insbesondere der in Figur 4 unten angeordnete Haltesteg 36 integral am Gehäuse 2 ausgeformt, während die anderen Haltestege 36, die in Figur 4 oben angeordnet sind, an einem Zusatzbauteil 38 integral ausgeformt sind, das auf geeignete Weise nachträglich am Gehäuse 2 befestigt werden kann. Beispielsweise kann das Zusatzbauteil 38 an das Gehäuse 2 angeschweißt oder angeklebt werden. Im Übrigen kann das Gehäuse 2 zweckmäßig als Spritzgussteil konzipiert sein, wodurch die Düsen 9 und auch die gegebenenfalls vorhandenen weiteren Komponenten des Ölabscheiders 1 abgesehen von der Blattfeder 15 und dem Ölaufnahmekörper 33 und dem Zusatzbauteil 38 integral am Gehäuse 2 ausgebildet sein können.

Gemäß Figur 3 kann zumindest eine der Düsen 9 radial verschlossen sein. Ein entsprechender Verschluss ist in Figur 3 mit 39 bezeichnet. Im hier gezeigten Beispiel sind von den insgesamt vorhandenen acht Düsen 9 drei Düsen 9 mit einem derartigen Verschluss 39 radial verschlossen. Zweckmäßig ist der Verschluss 39 dabei radial außen angeordnet. Durch die Positionierung derartiger geschlossener Düsen 9 lässt sich beispielsweise eine gewünschte Strömungsverteilung innerhalb des Ölabscheiders 1 bzw. eine Strömungsverteilung auf die übrigen Düsen 9 einstellen. Besonders zweckmäßig ist dabei eine Konfiguration, bei welcher auch die radial verschlossenen Düsen 9 die zuvor genannte Bypassöffnung 11 aufweisen.

Der hier vorgestellte Ölabscheider 1 arbeitet wie folgt:
Im Betrieb einer Brennkraftmaschine fällt Blow-by-Gas an, das mit Hilfe einer hier nicht gezeigten Kurbelgehäuseentlüftung abgeführt wird, wobei im Strömungspfad der Kurbelgehäuseentlüftung der hier gezeigte Ölabscheider 1 angeordnet ist. Dementsprechend durchströmt das Blow-by-Gas auch den Ölabscheider 1 gemäß dem Strömungspfad 7. Somit wird das Blow-by-Gas durch die Düsen 9 geführt, in denen die Blow-by-Gasströmung beschleunigt und auf den Ölaufnahmekörper 33 ausgerichtet wird. Die Blow-by-Gasströmung wird am Ölaufnahmekörper 33 in Richtung Auslass 4 abgelenkt. Darin mitgeführte Partikel und Öltröpfchen können dieser starken Strömungsumlenkung nicht folgen und prallen stattdessen gegen den Ölaufnahmekörper 33, der die Öltröpfchen absorbiert, sammelt und einem Auslass zuführt. Unterhalb eines vorbestimmten Druckwerts am Einlass 3 nimmt das Ventilglied 13 seine Schließstellung ein und verschließt die Bypassöffnungen 11 der Düsen 9 und somit den Bypass 12.

Steigt der Druck am Einlass 3 über den vorbestimmten Druckwert an, hebt das Ventilglied 13 ab und öffnet die Bypassöffnungen 11 und gibt somit den Bypass 12 frei. Durch die vorhergehende Umlenkung der Blow-by-Gasströmung in Richtung der Düsen 9 und durch die ebenfalls vorliegende radiale Ausrichtung des Ventilglieds 13 wird auch in diesem Fall ein Großteil der Blow-by-Gasströmung gegen den Ölaufnahmekörper 33 gelenkt, so dass die Impaktorwirkung auch bei mehr oder weniger geöffnetem Ventilglied 13 bzw. mehr oder weniger geöffnetem Bypasspfad 12 gegeben ist.

## Patentansprüche

1. Ölabscheider für eine Kurbelgehäuseentlüftung einer Brennkraftmaschine, insbesondere eines Kraftfahrzeugs,
- mit einem Gehäuse (2), das eine zylindrische Wand (5), einen axialen Einlass (3) für Blow-by-Gas und einen axialen Auslass (4) für Blow-by-Gas aufweist,
- mit einem Impaktor (8), der im Gehäuse (2) in einem vom Einlass (3) zum Auslass (4) führenden Strömungspfad (7) des Blow-by-Gases angeordnet ist und der mehrere zwischen Einlass (3) und Auslass (4) im Strömungspfad (7) angeordnete, radial auf eine Innenseite (10) der Wand (5) ausgerichtete Düsen (9) aufweist, wobei zumindest eine der Düsen (9) eine radiale Austrittsöffnung (40) besitzt,
- wobei zumindest eine der Düsen (9) an einer dem Auslass (4) zugewandten Seite eine axiale Öffnung (11) aufweist, die mit einem Ventilglied (13) gesteuert ist, das mittels Federkraft (14) in eine die jeweilige Öffnung (11) schließende Schließstellung angetrieben ist,
- wobei zumindest eine der Düsen (9) eine solche radiale Austrittsöffnung (40) und eine solche axiale Öffnung (11) aufweist,
**dadurch gekennzeichnet,**
**dass** zumindest eine der axial offenen Düsen (9) radial verschlossen ist.

2. Ölabscheider nach Anspruch 1,
**dadurch gekennzeichnet,**
**dass** ein durchströmbarer Querschnitt der jeweiligen Austrittsöffnung (40) unabhängig ist von der Stellung des Ventilglieds (13).

3. Ölabscheider nach einem der vorhergehenden Ansprüche,
**dadurch gekennzeichnet,**
**dass** die axialen Öffnungen (11) einen die radialen Austrittsöffnungen (40) umgehenden Bypasspfad (12) bilden, wobei das Ventilglied (13) bei geöffnetem Bypasspfad (12) den Blow-by-Gasstrom zumindest teilweise auf die Wand (5) ausrichtet.

4. Ölabscheider nach einem der Ansprüche 1 bis 3,
**dadurch gekennzeichnet,**
**dass** das Ventilglied (13) durch einen außenliegenden Ringbereich (16) einer Blattfeder (15) gebildet ist, die einen zentralen Befestigungsbereich (17) zum Fixieren der Blattfeder (15) am Gehäuse (2) und einen den Befestigungsbereich (17) mit dem Ringbereich (16) verbindenden axial federnden Federbereich (18) aufweist.

5. Ölabscheider nach Anspruch 4,
**dadurch gekennzeichnet,**
**dass** der Federbereich (18) spiralförmig ausgestaltet ist.

6. Ölabscheider nach Anspruch 4 oder 5,
**dadurch gekennzeichnet,**
**dass** der Befestigungsbereich (17) eine zentrale Durchgangsöffnung (19) aufweist, mit der die Blattfeder (15) auf einen axialen Dorn (23) des Gehäuses (2) aufgesteckt ist.

7. Ölabscheider nach Anspruch 6,
**dadurch gekennzeichnet,**
**dass** der Befestigungsbereich (17) an einem Rand (20) der Durchgangsöffnung (19) mehrere Krallen (21) aufweist, die sich mit dem Dorn (23) verkrallen.

8. Ölabscheider nach einem der Ansprüche 1 bis 7,
**dadurch gekennzeichnet,**
**dass** das Gehäuse (2) einen Ringkragen (24) aufweist, der an einer dem Auslass (4) zugewandten axialen Stirnseite (25) eine Auflage für das Ventilglied (13) bildet.

9. Ölabscheider nach einem der Ansprüche 1 bis 8,
**dadurch gekennzeichnet,**
**dass** die jeweilige Öffnung (11) durch eine dem Auslass (4) zugewandte axial offene Seite der jeweiligen Düse (9) gebildet ist.

10. Ölabscheider nach einem der Ansprüche 1 bis 9,
**dadurch gekennzeichnet,**
**dass** der Impaktor (8) zumindest einen Ölaufnahmekörper (33) aufweist, der an der Innenseite (10) der Wand (5) angeordnet ist.

11. Ölabscheider nach Anspruch 1 oder 10,
**dadurch gekennzeichnet, dass** das Gehäuse (2) mehrere Axialstege (35) aufweist, die zur Innenseite (10) beabstandet und in Umfangsrichtung verteilt angeordnet sind, wobei
- das Ventilglied (13) an den Axialstegen (35) radial positioniert und/oder axial geführt ist, und/oder
- der Ölaufnahmekörper (33) radial zwischen den Axialstegen (35) und der Wand (5) angeordnet ist.

12. Ölabscheider nach Anspruch 10 oder 11,
**dadurch gekennzeichnet, dass** das Gehäuse (2) wenigstens einen Haltesteg (36) aufweist, der im Bereich des Auslasses (4) axial gegenüber einem im Bereich des Einlasses (3) angeordneten Boden (37) des Gehäuses (2) angeordnet ist und der sich quer zu einer Längsmittelachse (6) der zylindrischen Wand (5) erstreckt,
wobei der Ölaufnahmekörper (33) axial zwischen dem Boden (37) und dem jeweiligen Haltesteg (36) angeordnet ist.

13. Ölabscheider nach einem der Ansprüche 1 bis 12,
**dadurch gekennzeichnet, dass** alle Düsen (9) axial offen sind.

## Claims

1. Oil separator for crankcase ventilation of an internal combustion engine, in particular of a motor vehicle,
- having a housing (2), which has a cylindrical wall (5), an axial inlet (3) for blow-by gas and an axial outlet (4) for blow-by gas,
- having an impactor (8), which is arranged in the housing (2) in a flow path (7) of the blow-by gas leading from the inlet (3) to the outlet (4) and has a plurality of nozzles (9) arranged in the flow path (7) between the inlet (3) and the outlet (4) and oriented radially onto an inner side (10) of the wall (5), wherein at least one of the nozzles (9) has a radial exit opening (40),
- wherein at least one of the nozzles (9) has, on a side facing towards the outlet (4), an axial opening (11) which is controlled by a valve member (13) that is driven by means of a spring force (14) into a closed position enclosing the respective opening (11),
- wherein at least one of the nozzles (9) has such a radial exit opening (40) and such an axial opening (11)
**characterised in that**
at least one of the axially open nozzles (9) is radially closed.

2. Oil separator according to claim 1,
**characterised in that**
a cross section, through which flow can take place, of the respective exit opening (40) is independent of the position of the valve member (13).

3. Oil separator according to any one of the preceding claims,
**characterised in that**
the axial openings (11) form a bypass path (12) circumventing the radial exit openings (40), wherein the valve member (13) orientates the blow-by gas flow at least partially onto the wall (5) when the bypass path (12) is open.

4. Oil separator according to any one of claims 1 to 3,
**characterised in that**
the valve member (13) is formed by an externally lying ring region (16) of a leaf spring (15), the latter having a central fastening region (17) for fixing the leaf spring (15) on the housing (2) and an axially resilient spring region (18) connecting the fastening region (17) to the ring region (16).

5. Oil separator according to claim 4,
**characterised in that**
the spring region (18) is spirally configured.

6. Oil separator according to claim 4 or 5
**characterised in that**
the fastening region (17) has a central through-opening (19), by which the leaf spring (15) is fitted onto an axial pin (23) of the housing (2).

7. Oil separator according to claim 6
**characterised in that**
the fastening region (17) has a plurality of claws (21) on an edge (20) of the through-opening (19), which engage with the pin (23).

8. Oil separator according to any one of claims 1 to 7,
**characterised in that**
the housing (2) has an annular collar (24), which forms a support for the valve member (13) on an axial end side (25) facing towards the outlet (4).

9. Oil separator according to any one of claims 1 to 8,
**characterised in that**
the respective opening (11) is formed by an axially open side, facing towards the outlet (4) of the respective nozzle (9).

10. Oil separator according to any one of claims 1 to 9,
**characterised in that**
the impactor (8) has at least one oil reception body (33), which is arranged on the inner side (10) of the wall (5).

11. Oil separator according to claim 1 or 10,
**characterised in that**
the housing (2) has a plurality of axial webs (35), which are separated from the inner side (10) and are arranged distributed in the circumferential direction, wherein
- the valve member (13) is radially positioned and/or axially guided on the axial webs (35), and/or
- the oil reception body (33) is arranged radially between the axial webs (35) on the wall (5).

12. Oil separator according to claim 10 or 11,
**characterised in that** the housing (2) has at least one holding web (36), which is arranged in the region of the outlet (4) axially facing a bottom (37), arranged in the region of the inlet (3) of the housing (2), and extends transversely to a longitudinal midaxis (6) of the cylindrical wall (5), wherein the oil reception body (33) is arranged axially between the bottom (37) and the respective holding web (36).

13. Oil separator according to any one of claims 1 to 12,
**characterised in that** all the nozzles (9) are axially open.

## Revendications

1. Déshuileur pour une ventilation de carter de vilebrequin d'un moteur à combustion interne, en particulier d'un véhicule automobile,
- avec un carter (2), qui présente une paroi (5) cylindrique, une entrée (3) axiale pour gaz de carter et une sortie (4) axiale pour gaz de carter,
- avec un impacteur (8), qui est agencé dans le carter (2) dans un chemin d'écoulement (7) du gaz de carter menant de l'entrée (3) à la sortie (4) et qui présente plusieurs buses (9) agencées entre l'entrée (3) et la sortie (4) dans le chemin d'écoulement (7), orientées radialement sur un côté intérieur (10) de la paroi (5), dans lequel au moins une des buses (9) possède une ouverture de sortie (40) radiale,
- dans lequel au moins une des buses (9) présente au niveau d'un côté tourné vers la sortie (4) une ouverture (11) axiale, qui est commandée avec un organe de soupape (13), qui est entraîné par force élastique (14) dans une position de fermeture fermant l'ouverture (11) respective,
- dans lequel au moins une des buses (9) présente une telle ouverture de sortie (40) radiale et une telle ouverture (11) axiale,
**caractérisé en ce**
**qu'**au moins une des buses (9) ouvertes axialement est fermée radialement.

2. Déshuileur selon la revendication 1
**caractérisé en ce**
**qu'**une section transversale pouvant être traversée de l'ouverture de sortie (40) respective est indépendante de la position de l'organe de soupape (13).

3. Déshuileur selon l'une quelconque des revendications précédentes,
**caractérisé en ce**
**que** les ouvertures (11) axiales forment un chemin de contournement (12) contournant les ouvertures de sortie (40) radiales, dans lequel, lorsque le chemin de contournement (12) est ouvert, l'organe de soupape (13) oriente le flux de gaz de carter au moins en partie sur la paroi (5).

4. Déshuileur selon l'une quelconque des revendications 1 à 3,
**caractérisé en ce**
**que** l'organe de soupape (13) est formé par une zone annulaire (16) extérieure d'un ressort à lame (15), qui présente une zone de fixation (17) centrale pour la fixation du ressort à lame (15) au niveau du carter (2) et une zone élastique (18) axialement élastique reliant la zone de fixation (17) à la zone annulaire (16).

5. Déshuileur selon la revendication 4,
**caractérisé en ce**
**que** la zone élastique (18) est réalisée en forme de spirale.

6. Déshuileur selon la revendication 4 ou 5,
**caractérisé en ce**
**que** la zone de fixation (17) présente une ouverture traversante (19) centrale, avec laquelle le ressort à lame (15) est enfiché sur un mandrin (23) axial du carter (2).

7. Déshuileur selon la revendication 6,
**caractérisé en ce**
**que** la zone de fixation (17) présente au niveau d'un bord (20) de l'ouverture traversante (19) plusieurs griffes (21), qui s'agrippent avec le mandrin (23).

8. Déshuileur selon l'une quelconque des revendications 1 à 7,
**caractérisé en ce**
**que** le carter (2) présente un col annulaire (24), qui forme un support pour l'organe de soupape (13) au niveau d'un côté frontal (25) axial tourné vers la sortie (4).

9. Déshuileur selon l'une quelconque des revendications 1 à 8,
**caractérisé en ce**
**que** l'ouverture (11) respective est formée par un côté axialement ouvert tourné vers la sortie (4) de la buse (9) respective.

10. Déshuileur selon l'une quelconque des revendications 1 à 9,
**caractérisé en ce**
**que** l'impacteur (8) présente au moins un corps de réception d'huile (33), qui est agencé au niveau du côté intérieur (10) de la paroi (5).

11. Déshuileur selon la revendication 1 ou 10,
**caractérisé en ce que** le carter (2) présente plusieurs nervures axiales (35), qui sont espacées du côté intérieur (10) et disposées de manière répartie dans le sens circonférentiel, dans lequel
- l'organe de soupape (13) est positionné radialement au niveau des nervures axiales (35) et/ou guidé axialement, et/ou
- le corps de réception d'huile (33) est agencé radialement entre les nervures axiales (35) et la paroi (5).

12. Déshuileur selon la revendication 10 ou 11,
**caractérisé en ce que** le carter (2) présente au moins une nervure de retenue (36), qui est agencée dans la zone de la sortie (4) axialement en face d'un fond (37) du carter (2) agencé dans la zone de l'entrée (3), et qui s'étend transversalement à un axe longitudinal médian (6) de la paroi (5) cylindrique, dans lequel le corps de réception d'huile (33) est agencé axialement entre le fond (37) et la nervure de retenue (36) respective.

13. Déshuileur selon l'une quelconque des revendications 1 à 12,
**caractérisé en ce que** toutes les buses (9) sont axialement ouvertes.
